# EUROPÄISCHE PATENTSCHRIFT

(11) **EP 3 650 964 B1**
(45) Veröffentlichungstag und Bekanntmachung des Hinweises auf die Patenterteilung: **10.08.2022**
(21) Anmeldenummer: 19202224.2
(22) Anmeldetag: 09.10.2019
(51) Int. Cl.: G05B 13/04, G06N 7/00, G06N 3/08, G06N 20/00, G05B 13/02

(54) **VERFAHREN ZUM STEUERN ODER REGELN EINES TECHNISCHEN SYSTEMS**
METHOD FOR CONTROLLING OR REGULATING A TECHNICAL SYSTEM
PROCÉDÉ DE COMMANDE OU DE RÉGULATION D'UN SYSTÈME TECHNIQUE

(30) Priorität: 19.10.2018 DE 102018217966
(43) Veröffentlichungstag der Anmeldung: 13.05.2020
(73) Patentinhaber: Robert Bosch GmbH, 70442 Stuttgart (DE)
(72) Erfinder: Daniel, Christian, 71229 Leonberg (DE); Volpp, Michael, 70180 Stuttgart (DE)

(56) Entgegenhaltungen:
- Yutian Chen ET AL: "Learning to Learn without Gradient Descent by Gradient Descent", , 12. Juni 2017 (2017-06-12), XP055670466, Gefunden im Internet: URL:https://arxiv.org/pdf/1611.03824.pdf [gefunden am 2020-02-20]
- ERIC BROCHU ET AL: "A Tutorial on Bayesian Optimization of Expensive Cost Functions, with Application to Active User Modeling and Hierarchical Reinforcement Learning", ARXIV.ORG, CORNELL UNIVERSITY LIBRARY, 201 OLIN LIBRARY CORNELL UNIVERSITY ITHACA, NY 14853, 12. Dezember 2010 (2010-12-12), XP080467931,
- MICHAEL VOLPP ET AL: "Meta-Learning Acquisition Functions for Transfer Learning in Bayesian Optimization", ARXIV.ORG, CORNELL UNIVERSITY LIBRARY, 201 OLIN LIBRARY CORNELL UNIVERSITY ITHACA, NY 14853, 4. April 2019 (2019-04-04), XP081492470,
- MICHAEL VOLPP ET AL: "Meta-Learning Acquisition Functions for Bayesian Optimization", ARXIV.ORG, CORNELL UNIVERSITY LIBRARY, 201 OLIN LIBRARY CORNELL UNIVERSITY ITHACA, NY 14853, 4. April 2019 (2019-04-04), XP081165074,
- Jost Tobias Springenberg ET AL: "Bayesian Optimization with Robust Bayesian Neural Networks", , 1. Januar 2016 (2016-01-01), XP055564393, Gefunden im Internet: URL:https://papers.nips.cc/paper/6117-baye sian-optimization-with-robust-bayesian-neu ral-networks.pdf [gefunden am 2019-03-04]

## Beschreibung

Die vorliegende Erfindung betrifft Verfahren zum Steuern oder Regeln eines technischen Systems sowie ein hierzu eingerichtetes Computerprogramm.

### Stand der Technik

Bayes'sche Optimierung (Bayesian Optimization) kann als globale Optimierungsmethode für Black-Box-Prozesse eingesetzt werden, insbesondere für die Optimierung der Parameter einer dem zugrundeliegenden technischen Prozess entsprechenden Funktion, wobei der technische Prozess durch seine Inputs und Outputs definiert ist. Hierzu können in der Bayes'schen Optimierung iterativ Testpunkte gewählt werden, oft mit dem Ziel, mit möglichst wenigen Tests denjenigen Eingangsparameter zu finden, der ein Funktionsoptimum erreicht.

Zu diesem Zweck nutzt die Bayes'sche Optimierung sogenannte Akquisitionsfunktionen (Acquisition Functions), um den nächsten Testpunkt zu wählen. Diese Akquisitionsfunktionen werden typischerweise manuell definiert, siehe E. Brochu, V.M. Cora and Nando de Freitas, "A Tutorial on Bayesian Optimization of Expensive Cost Functions, with Application to Active User Modeling and Hierarchical Reinforcement Learning", CoRR 2010.

Yutian Chen ET AL: "Learning to Learn without Gradient Descent by Gradient Descent", 12. Juni 2017 (2017-06-12), XP055670466, online abrufbar: https://arxiv.org/pdf/1611.03824.pdf offenbart ein Verfahren zum Anlernen von rekurrenten neuronalen Netzen mittels Gradientenabstieges für synthetischen Funktionen.

Jost Tobias Springenberg ET AL: "Bayesian Optimization with Robust Bayesian Neural Networks", 1. Januar 2016 (2016-01-01), XP055564393, online abrufbar: https://papers.nips.cc/paper/6117-bayesian-optimization-with-robust-bayesian-neural-networks.pdf offenbart ein Verfahren für eine Verwendung neuronaler Netze für die Bayes'sche Optimierung.

### Offenbarung der Erfindung

Vorgeschlagen wird ein Verfahren zum Steuern oder Regeln eines technischen Systems, insbesondere eines Werkzeugs, einer Werkmaschine, eines Roboters oder eines Fahrzeugs. Dabei wird mindestens ein Parameter der Steuerung oder Regelung durch eine Bayes'sche Optimierung bestimmt wird, wobei in der Bayes'schen Optimierung ein nächster Testpunkt des iterativen Optimierungsvorgangs durch eine Akquisitionsfunktion bestimmt wird. Es wird nun vorgeschlagen, die Akquisitionsfunktion in der Bayes'schen Optimierung durch ein Lernverfahren, vorzugsweise Reinforcement Learning oder Imitation Learning, automatisch bestimmen zu lassen, wobei dann mittels der bestimmten Akquisitionsfunktion in der Bayes'schen Optimierung der Parameter der Steuerung oder Regelung ermittelt wird und das technische System abhängig von dem ermittelten Parameter angesteuert oder geregelt wird.

Dabei ist die Akquisitionsfunktion (Acquisition Function) insbesondere eine vergleichende Bewertungsfunktion zur Auswahl (potentieller oder tatsächlicher) zukünftiger Testpunkte.

Bayes'sche Optimierung (Bayesian Optimization) ist insbesondere eine gradientenfreie Methode zur globalen Optimierung einer unbekannten Funktion durch iteratives Auswerten von Testpunkten.

Reinforcement Learning ist insbesondere ein Machine Learning Framework zur Optimierung sequentieller Entscheidungsprobleme. Dabei ist die sogenannte Policy insbesondere eine durch das Reinforcement Learning zu optimierende Entscheidungsfunktion.

Vorzugsweise wird die Akquisitionsfunktion in einer Simulation der Steuerung oder Regelung des technischen Systems gelernt, wobei in der Simulation die Optimierung der Steuerung oder Regelung durch die Bayes'sche Optimierung als Aufgabe eines Trainings eines Lernverfahrens gewählt wird.

In der Simulation werden vorzugsweise Bedingungen bzw. Umgebungsparameter für die Steuerung oder Regelung des technischen Systems zufällig ausgewählt. Mit einer initialen Akquisitionsfunktion wird in der Simulation vorzugsweise eine Prozessqualität für die mit Bayes'scher Optimierung optimierte Steuerung oder Regelung des technischen Systems bestimmt und abhängig von der bestimmten Prozessqualität erfolgt eine Anpassung bzw. Optimierung der initialen Akquisitionsfunktion und somit ein Lernen einer verbesserten Akquisitionsfunktion. Vorzugsweise erfolgt nach der Bestimmung der Akquisitionsfunktion in der Simulation eine Prozessoptimierung auf dem realen technischen System unter Verwendung der gelernten Akquisitionsfunktion.

Vorzugsweise wird das Lernverfahren für die Akquisitionsfunktion iterativ ausgeführt bis zu einem Abbruchkriterium, insbesondere einem Erreichen einer vorbestimmten Prozessqualität, einer vorbestimmten Dauer des Verfahrens oder einer vorbestimmten Anzahl an Iterationen.

Die Erfindung ermöglicht eine automatische, selbstlernende Erstellung von Akquisitionsfunktionen. Diese gelernten Akquisitionsfunktionen sind insgesamt mächtiger sowie schneller auszuwerten. Weiterhin können diese Akquisitionsfunktionen für spezielle Problemklassen oder Anforderungen optimiert gelernt werden, was weitere Effizienzvorteile wie geringere Anzahl an Testpunkten ermöglicht. Sie ermöglichen effizientere und effektivere Suchen, d.h., es werden Optima mit weniger Versuchen gefunden und die gefundenen Optima haben einen kleineren Regret (Unterschied zum optimalen Funktionswert). Die Auswertung der gelernten Akquisitionsfunktionen benötigt in der Regel deutlich weniger Rechenzeit als einige der aufwendigeren herkömmlich verwendeten Akquisitionsfunktionen wie "Entropy Search" (<1s gegenüber mehrere Stunden).

### Zeichnung

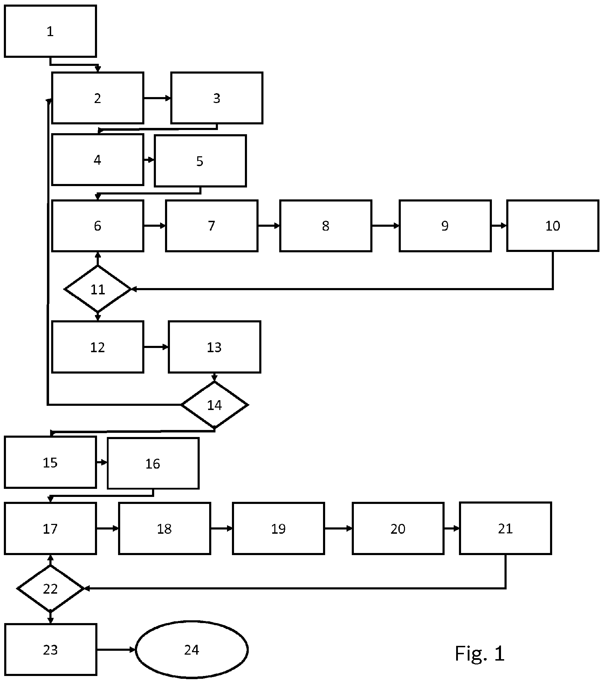

Nachfolgend ist die Erfindung unter Bezugnahme auf die beiliegende Zeichnung und anhand von Ausführungsbeispielen näher beschrieben. Dabei zeigt Figur 1 schematisch einen beispielhaften Ablauf eines Verfahrens zum Steuern oder Regeln eines technischen Systems.

### Beschreibung der Ausführungsbeispiele

Bayes'sche Optimierung (Bayesian Optimization) kann als globale Optimierungsmethode für Black-Box-Prozesse eingesetzt werden. Hierzu können iterativ Testpunkte gewählt werden, oft mit dem Ziel, mit möglichst wenigen Tests denjenigen Eingangsparameter zu finden, der ein Funktionsoptimum erreicht. Zu diesem Zweck nutzt die Bayes'sche Optimierung sogenannte Akquisitionsfunktionen (Acquisition Functions), um den nächsten Testpunkt zu wählen.

Bekannte Akquisitionsfunktionen umfassen:
- "Probability of Improvement": In der Praxis kann diese Akquisitionsfunktion zu ineffizienten lokalen Suchen führen.
- "Expected Improvement": Diese Akquisitionsfunktion versucht Nachteile der Funktion "Probability of Improvement" auszugleichen, sucht daher aber breit und findet unter Umständen nicht das Optimum, sondern kann zwischen Parameterbereichen hin und her springen.
- "Upper Confidence Bound": Diese Akquisitionsfunktion kann sehr effizient sein, aber für höher-dimensionale Probleme oft vergleichsweise schlechte Ergebnisse liefern.
- "Entropy Search": In vielen Fällen liefert diese Akquisitionsfunktion sehr gute Ergebnisse, erfordert jedoch oft sehr hohe Rechenzeiten (oft Stunden bis Tage).

Generell ist festzuhalten, dass für bekannte Akquisitionsfunktionen allgemeine Vor- und Nachteile festzustellen sind, welche aber nur als Anhaltspunkte zur Auswahl für die Optimierung eines bestimmten technischen Prozesses, nicht aber als definitive Entscheidungspunkte genutzt werden können. Das heißt, dass in der Praxis typischerweise mehrere Akquisitionsfunktionen getestet werden, um die jeweils beste Akquisitionsfunktion problemspezifisch zu wählen.

Es wird nun ein Verfahren vorgeschlagen, mit dem eine einzusetzende Akquisitionsfunktion mittels Lernverfahren automatisch bestimmt werden kann. Akquisitionsfunktionen können dabei gelernt werden, insbesondere indem die Optimierung von unbekannten Funktionen via Bayes'scher Optimierung als eine Aufgabe im Training eines Lernverfahrens gestellt wird.

Dazu werden in einem ersten Schritt vorzugsweise Repräsentationen der relevanten Funktionsklassen des technischen Systems bzw. technischen Prozesses ermittelt bzw. bereitgestellt. Dies kann durch die Vorgabe genereller Funktionsklassen wie z.B. Polynome erfolgen oder durch spezielle Simulationen von zu steuernden oder regelnden technischen Systemen unter verschiedenen Bedingungen.

Wird ein entsprechendes Verfahren zur Steuerung oder Regelung eines technischen Systems, beispielsweise zur Optimierung von Schleifprozessen, eingesetzt, können in den entsprechenden Simulationen Systemeigenschaften abgebildet werden, im Beispiel die Eingangsmaterialien, das konkrete Schleifverfahren oder Umgebungsbedingungen des Schleifprozesses.

In einem zweiten Schritt wird simulativ eine optimale Akquisitionsfunktion für den zu optimierenden Prozess gelernt. Dazu werden, vorzugsweise wiederholt, folgende Schritte ausgeführt:
a. Erstens können zufällig Bedingungen wie Umgebungsbedingungen ausgewählt werden, um die Simulationsumgebung zu fixieren.
b. Mithilfe von Bayes'scher Optimierung wird unter der momentanen Policy (Akquisitionsfunktion) das Funktionsoptimum gesucht.
c. Aufgrund der erhobenen Daten wird eine verbesserte Policy gelernt.

Die im zweiten Schritt gelernte Policy kann nun als Akquisitionsfunktion für das reale System genutzt werden, um den technischen Prozess zu optimieren.

Beim Lernverfahren im zweiten Schritt werden im Simulationsprozess vorzugsweise für jede Iteration k des Lernverfahrens mit i indizierte Schritte der Bayes'schen Optimierung durchgeführt:
- GP_k,i: das gelernte Prozessmodell zum Zeitpunkt i
- \theta_k,i: der gewählte Testpunkt
- q_k,i: die resultierende Prozessqualität

Mithilfe dieser Daten kann eine Policy entweder durch Reinforcement Learning oder durch Imitation Learning gelernt werden.

### Freies Lernen (Reinforcement Learning)

Im freien Lernmodus wird keine Ziel-Akquisitionsfunktion vorgegeben, stattdessen soll eine komplett neue Akquisitionsfunktion gelernt werden. In diesem Fall werden sogenannte Modellfreie Reinforcement-Learning-Methoden genutzt, um eine Policy zu trainieren, die eine optimale Akquisitionsfunktion darstellt. Solche Verfahren sind z.B. Policy-Gradient-Methoden, Q-Learning-Methoden, Actor-Critic-Methoden. Für jede dieser Methoden ist eine Vielzahl von Algorithmen verfügbar, die für den beschriebenen Lernprozess in Frage kommen.

Vorteil des freien Lernens ist eine in der Regel final bessere Lösung, die auch auf gewünschte Anwendungsklassen spezialisiert werden kann, um dort einen Effizienzvorteil zu erreichen.

### Zielgerichtetes Lernen (Imitation Learning)

Im Falle des zielgerichteten Lernens wird eine vorhandene Akquisitionsfunktion als Ziel vorgegeben. Vorteil ist, dass die gelernte Repräsentation der Akquisitionsfunktion wesentlich schneller auszuwerten ist. Dafür werden Daten mithilfe der Ziel-Akquisitionsfunktion erzeugt, die dann in einem Supervised-Learning-Verfahren genutzt werden, um die Policy auf die Reproduktion des beobachteten Verhaltens zu trainieren.

Vorteil ist ein einfacheres Lernproblem, da nur bekanntes Verhalten imitiert werden muss und kein neues Verhalten von Grund auf gelernt werden muss. Dadurch reduziert sich u.U. auch die Lernzeit insgesamt.

Wenn Reinforcement Learning genutzt wird, kann die Policy nach jeder Iteration k durch Reinforcement-Methoden angepasst werden. Wenn Imitation Learning genutzt wird, wird die Policy erst nach Erstellen aller Datenpunkte angepasst.

Das vorgeschlagene Verfahren wird für die Optimierung verschiedenster technischer Steuerungs- bzw. Regelungsprozesse eingesetzt, insbesondere zur Steuerung oder Regelung eines technischen Systems, insbesondere eines Roboters, eines Fahrzeugs, eines Werkzeugs oder einer Werkmaschine, um abhängig von erfassten Eingangsgrößen Ausgangsgrößen für die Steuerung bzw. Regelung zu bestimmen und heranzuziehen. Als Eingangsgrößen der Regelung bzw. Steuerung kommen insbesondere Sensordaten oder abhängig von Sensordaten ermittelte Größe in Frage. Die Sensordaten können von Sensoren des technischen Systems stammen oder von dem technischen System von extern empfangen werden. Abhängig von den Ausgangsgrößen bzw. Steuer- oder Regelungsgrößen wird durch eine Recheneinheit mindestens ein Aktor des technischen Systems mit einem Ansteuersignal angesteuert bzw. mit einem Regelsignal geregelt. Beispielsweise so kann eine Bewegung eines Roboters oder Fahrzeugs gesteuert werden oder eine Steuerung einer Antriebseinheit oder eines Fahrerassistenzsystems eines Fahrzeugs erfolgen. Konkretere Einsatzmöglichkeiten umfassen z.B. Schleifprozesse, Optimierung von Ultrasonic-Bonding-Prozessen, Optimierung von Fügeprozessen, Optimierung von Bohrprozessen wie Tieflochbohren, Tuning von PID-Kontrollern, Optimierung von parametrierten Wunschtrajektorien von Fahrzeugen oder Robotern u.v.m.

Z.B. kann die Optimierung eines realen Schleifprozesses erfolgen bei einer gegebenen (nicht ausreichend akkuraten) Simulation des Schleifprozesses. Die Simulation kann durch verschiedene Stellgrößen in ihrem Verhalten verändert werden. Diese können z.B. Werkzeugmaterial, Werkstückmaterial, Umgebungsgrößen, Prozessrauschen, etc. sein. Mithilfe des beschriebenen Verfahrens kann eine optimale bzw. optimierte Akquisitionsfunktion für generelle Schleifprozesse aufgrund der gegebenen Simulation gelernt werden, indem während des Lernvorgangs die Simulationsparameter regelmäßig geändert werden. Diese Akquisitionsfunktion resultiert in einem besonders effizienten Bayes'schen Optimierungsprozess für die Parametrierung realer Schleifprozesse, da die zugrundeliegende Akquisitionsfunktion auf Schleifprozesse (bzw. eine bestimmte Klasse von Schleifprozessen) spezialisiert ist.

Fig. 1 zeigt schematisch einen beispielhaften Ablauf des vorgeschlagenen Verfahrens zum Lernen einer Akquisitionsfunktion für eine Bayes'sche Optimierung.

In einem ersten Schritt 1 wird eine Policy (Akquisitionsfunktion) initialisiert. Im Folgenden Schritt 2 werden Umgebungsbedingungen für die Simulation, beispielsweise Materialparameter, bestimmt oder zufällig ausgewählt. Für diese Umgebungsbedingungen wird im Folgenden Schritt 3 eine Simulation des technischen Prozesses, hier des Schleifprozesses gestartet. Hierbei wird zunächst in Schritt 4 ein erster Zähler auf null gesetzt. Im Folgenden Schritt 5 wird ein Prozessmodell entsprechend dem Zählerwert null des ersten Zählers initialisiert. Im Folgenden Schritt 6 wird das Prozessmodell entsprechend dem aktuellen Zählerwert des ersten Zählers zur Verfügung gestellt. Die aktuelle Policy wählt in Schritt 7 die Prozessparameter entsprechend dem zur Verfügung gestellten Prozessmodell aus. Im Folgenden Schritt 8 werden die Prozessparameter in der Simulation evaluiert bzw. anhand der simulierten Prozessqualität bewertet. Das Prozessmodell wird entsprechend im Folgenden Schritt 9 abhängig von der Evaluierung bzw. Bewertung aktualisiert bzw. angepasst. Im Folgenden Schritt 10 wird der erste Zähler um einen Schritt erhöht. Abhängig von einem Abbruchkriterium (z.B. Prozessqualität oder Anzahl der Iterationen) wird im Folgenden Schritt 11 die Schleife der Schritte 6 bis 10 beendet und in Schritt 12 verzweigt oder es erfolgt eine Verzweigung zu Schritt 6 und erneutes Durchlaufen der Schritte 6 bis 10. Im Schritt 12 wird eine Belohnungsfunktion ausgewertet, welche einen Belohnungswert (Reward) entsprechend der festgestellten Prozessqualität für die gewählten Parameter vergibt. Im Folgenden Schritt 13 wird die Policy (Akquisitionsfunktion) durch ein Lernverfahren (beispielsweise ein Reinforcement Learning) aktualisiert. Daraufhin wird im Folgenden Schritt 14 bestimmt, ob die Simulation durch Verzweigen in Schritt 2 in einer weiteren Schleife noch einmal durchgeführt wird oder ob (z.B. bei ausreichender Konvergenz des Lernverfahrens) die Simulation beendet wird und in Schritt 15 verzweigt wird.

Mit dem Schritt 15 beginnt nach der vorherigen Simulation eine Prozessoptimierung auf dem realen System. Im Schritt 15 wird ein zweiter Zähler initialisiert bzw. auf null gesetzt. Das Prozessmodell entsprechend dem Zählerstand null des zweiten Zählers wird im Folgenden Schritt 16 initialisiert. Im Folgenden Schritt 17 wird das Prozessmodell entsprechend dem aktuellen Zählerwert des zweiten Zählers zur Verfügung gestellt. Die aktuelle Policy entsprechend dem aktuellen Zählerwert des zweiten Zählers wählt in Schritt 18 die Prozessparameter entsprechend dem zur Verfügung gestellten Prozessmodell. Im Folgenden Schritt 19 werden die Prozessparameter im realen System evaluiert bzw. anhand der Prozessqualität auf dem realen System bewertet. Das Prozessmodell wird entsprechend im Folgenden Schritt 20 abhängig von der Evaluierung bzw. Bewertung aktualisiert bzw. angepasst. Im Folgenden Schritt 21 wird der zweite Zähler um einen Schritt erhöht. Abhängig von einem Abbruchkriterium (z.B. Prozessqualität oder Anzahl der Iterationen) wird im Folgenden Schritt 22 die Schleife der Schritte 17 bis 22 beendet und in Schritt 23 verzweigt oder es erfolgt eine Verzweigung zu Schritt 17 und erneutes Durchlaufen der Schritte 17 bis 22.

In Schritt 23 werden die optimalen bzw. optimierten Parameter für den Optimierungsprozess extrahiert und der technische Prozess, hier der Schleifprozess, kann mit den optimalen Parametern durchgeführt werden, d.h. das technische System wird unter Verwendung der bestimmten Parameter angesteuert oder geregelt.

Die beschriebenen Verfahren können auch zur Optimierung eines maschinellen Lernsystems, insbesondere eines Neuronalen Netzes, verwendet werden. Dabei kann ein Parameter des Lernsystems, insbesondere ein Hyperparameter durch eine Bayes'sche Optimierung bestimmt werden. In der Bayes'schen Optimierung wird ein nächster Testpunkt durch eine Akquisitionsfunktion bestimmt, die Akquisitionsfunktion in der Bayes'schen Optimierung wird durch ein Lernverfahren automatisch bestimmt und mittels der bestimmten Akquisitionsfunktion wird in der Bayes'schen Optimierung der Parameter ermittelt. Das maschinelle Lernsystem wird dann abhängig von dem ermittelten Parameter angelernt. Das maschinelle Lernsystem, z.B. das neuronale Netz, ist dabei insbesondere computerimplementiert, d.h. sowohl die Berechnungen zur Bestimmung der Akquisitionsfunktion als auch für den Anlernprozess werden durch Prozessoren durchgeführt. Die Parameter des Lernsystems werden auf maschinenlesbaren Speichern abgelegt.

## Patentansprüche

1. Verfahren zum Steuern oder Regeln (23) eines technischen Systems, wobei ein Parameter der Steuerung oder Regelung durch eine Bayes'sche Optimierung bestimmt wird, wobei in der Bayes'schen Optimierung ein nächster Testpunkt durch eine Akquisitionsfunktion bestimmt wird, **dadurch gekennzeichnet, dass** die Akquisitionsfunktion in der Bayes'schen Optimierung durch automatische selbstlernende Erstellung von Akquisitionsfunktionen, vorzugsweise durch Reinforcement Learning oder Imitation Learning, bestimmt (13) wird, dass mittels der bestimmten Akquisitionsfunktion in der Bayes'schen Optimierung der Parameter der Steuerung oder Regelung ermittelt wird und dass das technische System abhängig von dem ermittelten Parameter angesteuert oder geregelt (23) wird.

2. Verfahren nach dem vorangegangenen Anspruch, **dadurch gekennzeichnet, dass** die Akquisitionsfunktion in einer Simulation (3) der Steuerung oder Regelung des technischen Systems gelernt wird.

3. Verfahren nach Anspruch 2, **dadurch gekennzeichnet, dass** in der Simulation die Optimierung der Steuerung oder Regelung durch die Bayes'sche Optimierung als Aufgabe eines Trainings eines Lernverfahrens gewählt (7) wird.

4. Verfahren nach einem der Ansprüche 2 oder 3, **dadurch gekennzeichnet, dass** in der Simulation Bedingungen für die Steuerung oder Regelung des technischen Systems zufällig ausgewählt (2) werden.

5. Verfahren nach einem der Ansprüche 2 bis 4, **dadurch gekennzeichnet, dass** in der Simulation mit einer initialen Akquisitionsfunktion eine Prozessqualität für die mit Bayes'scher Optimierung optimierte Steuerung oder Regelung des technischen Systems bestimmt wird und abhängig von der bestimmten Prozessqualität eine Anpassung der initialen Akquisitionsfunktion erfolgt (9).

6. Verfahren nach einem der Ansprüche 2 bis 5, **dadurch gekennzeichnet, dass** nach der Bestimmung der Akquisitionsfunktion in der Simulation eine Prozessoptimierung auf dem realen technischen System erfolgt.

7. Verfahren nach einem der vorangegangenen Ansprüche, **dadurch gekennzeichnet, dass** das Lernverfahren iterativ bis zu einem Abbruchkriterium ausgeführt wird, insbesondere ein Erreichen einer vorbestimmten Prozessqualität, einer vorbestimmten Dauer des Verfahrens oder einer vorbestimmten Anzahl an Iterationen.

8. Verfahren nach einem der vorangegangenen Ansprüche, **dadurch gekennzeichnet, dass** die Akquisitionsfunktion durch Reinforcement Learning oder Imitation Learning bestimmt wird.

9. Verfahren nach einem der vorangegangenen Ansprüche, **dadurch gekennzeichnet, dass** das technische System ein Werkzeug, eine Werkmaschine, ein Roboter oder ein Fahrzeug ist.

10. Computerprogramm, welches dazu eingerichtet ist, ein Verfahren nach einem der vorangegangenen Ansprüche durchzuführen.

11. Recheneinheit mit einem Computerprogramm nach Anspruch 10.

## Claims

1. Method for controlling or regulating (23) a technical system, wherein a parameter of the control or regulation is determined by way of a Bayesian optimization, the Bayesian optimization involving a next test point being determined by way of an acquisition function, **characterized in that** the acquisition function is determined (13) in the Bayesian optimization by way of automatic self-learning creation of acquisition functions, preferably by way of reinforcement learning or imitation learning, **in that** the determined acquisition function is used in the Bayesian optimization to ascertain the parameter of the control or regulation and **in that** the technical system is controlled or regulated (23) on the basis of the ascertained parameter.

2. Method according to the preceding claim, **characterized in that** the acquisition function is learnt in a simulation (3) of the control or regulation of the technical system.

3. Method according to Claim 2, **characterized in that** the optimization of the control or regulation by way of the Bayesian optimization is chosen (7) as a task of training a learning method in the simulation.

4. Method according to either of Claims 2 and 3, **characterized in that** conditions for controlling or regulating the technical system are selected (2) at random in the simulation.

5. Method according to one of Claims 2 to 4, **characterized in that** an initial acquisition function is used in the simulation to determine a process quality for controlling or regulating the technical system in a manner optimized using Bayesian optimization, and the determined process quality is taken as a basis for adapting (9) the initial acquisition function.

6. Method according to one of Claims 2 to 5, **characterized in that** process optimization takes place on the real technical system after the acquisition function has been determined in the simulation.

7. Method according to one of the preceding claims, **characterized in that** the learning method is performed iteratively up until a termination criterion, in particular arrival at a predetermined process quality, a predetermined duration for the method or a predetermined number of iterations.

8. Method according to one of the preceding claims, **characterized in that** the acquisition function is determined by way of reinforcement learning or imitation learning.

9. Method according to one of the preceding claims, **characterized in that** the technical system is a tool, a machine tool, a robot or a vehicle.

10. Computer program configured to carry out a method according to one of the preceding claims.

11. Computing unit having a computer program according to Claim 10.

## Revendications

1. Procédé de commande ou de régulation (23) d'un système technique,
un paramètre de la commande ou de la régulation étant déterminé par optimisation de Bayes, un point de test suivant étant déterminé dans l'optimisation de Bayes par une fonction d'acquisition, **caractérisé en ce que** la fonction d'acquisition est déterminée (13) dans l'optimisation de Bayes par création automatique par auto-apprentissage de fonctions d'acquisition, de préférence par apprentissage par renforcement ou apprentissage par imitation,
le paramètre de la commande ou de la régulation est déterminé au moyen de la fonction d'acquisition déterminée dans l'optimisation de Bayes et
le système technique est commandé ou régulé (23) en fonction du paramètre déterminé.

2. Procédé selon la revendication précédente, **caractérisé en ce que** la fonction d'acquisition est apprise dans une simulation (3) de la commande ou de la régulation du système technique.

3. Procédé selon la revendication 2, **caractérisé en ce que**, dans la simulation, l'optimisation de la commande ou de la régulation est choisie (7) par l'optimisation de Bayes comme tâche d'entraînement d'un processus d'apprentissage.

4. Procédé selon l'une des revendications 2 ou 3, **caractérisé en ce que**, dans la simulation, les conditions de commande ou de régulation du système technique sont choisies aléatoirement (2).

5. Procédé selon l'une des revendications 2 à 4, **caractérisé en ce que**, dans la simulation avec une fonction d'acquisition initiale, une qualité de processus est déterminée pour la commande ou la régulation du système technique optimisée avec une optimisation de Bayes et une adaptation de la fonction d'acquisition initiale est effectuée (9) en fonction de la qualité de processus déterminée.

6. Procédé selon l'une des revendications 2 à 5, **caractérisé en ce que**, après la détermination de la fonction d'acquisition dans la simulation, une optimisation de processus est effectuée sur le système technique réel.

7. Procédé selon l'une des revendications précédentes, **caractérisé en ce que** le procédé d'apprentissage est réalisé de manière itérative jusqu'à un critère de terminaison, notamment lorsqu'une qualité de processus prédéterminée, une durée prédéterminée du procédé ou un nombre d'itérations prédéterminé est atteint(e).

8. Procédé selon l'une des revendications précédentes, **caractérisé en ce que** la fonction d'acquisition est déterminée par apprentissage par renforcement ou apprentissage par imitation.

9. Procédé selon l'une des revendications précédentes, **caractérisé en ce que** le système technique est un outil, une machine, un robot ou un véhicule.

10. Logiciel conçu pour mettre en œuvre un procédé selon l'une des revendications précédentes.

11. Unité informatique comprenant un logiciel selon la revendication 10.
